# EUROPÄISCHE PATENTSCHRIFT

(11) **EP 3 434 627 B1**
(45) Veröffentlichungstag und Bekanntmachung des Hinweises auf die Patenterteilung: **29.05.2024**
(21) Anmeldenummer: 18181071.4
(22) Anmeldetag: 02.07.2018
(51) Int. Cl.: B65G 1/137

(54) **MOBILER KOMMISSIONIERROBOTER UND VERFAHREN ZUM BETRIEB EINES MOBILEN KOMMISSIONIERROBOTERS**
MOBILE ORDER PICKING ROBOT AND METHOD FOR OPERATING A MOBILE ORDER PICKING ROBOT
ROBOT DE PRÉPARATION DES COMMANDES MOBILE ET PROCÉDÉ DE FONCTIONNEMENT D'UN ROBOT DE PRÉPARATION DES COMMANDES MOBILE

(30) Priorität: 26.07.2017 DE 102017116912
(43) Veröffentlichungstag der Anmeldung: 30.01.2019
(73) Patentinhaber: Linde Material Handling GmbH, 63743 Aschaffenburg (DE)
(72) Erfinder: GROH, Jonas, 63743 Aschaffenburg (DE); KRUMBHOLZ, Peter, 63869 Jakobsthal (DE)
(74) Vertreter: Patentship Patentanwaltgesellschaft

(56) Entgegenhaltungen:
- WO-A1-2016/118955
- US-A1- 2016 132 059
- US-A1- 2017 183 159
- US-B1- 9 487 357
- US-B1- 9 592 759

## Beschreibung

Die Erfindung betrifft einen mobilen Kommissionierroboter und ein Verfahren zum Betreiben eines mobilen Kommissionierroboters mit einem autonomen Fahrantrieb, einer Steuerung, einem Lasthandhabungsmanipulator, einem Lasttragmittel zur Handhabung eines Packstückes, wobei das Lasttragmittel am Lasthandhabungsmanipulator angeordnet ist, und einer Aufnahmeeinrichtung für eine als Palette ausgebildete Lasttragvorrichtung zum Stapeln von einzelnen Packstücken, die aus einem Lager von verschiedenen Quellpaletten entnehmbar sind, wobei eine zusätzliche Feinmanipulatorvorrichtung am Kommissionierroboter zur Feinjustierung einzelner Packstücke auf der als Palette ausgebildeten Lasttragvorrichtung nach einer Ablage mittels des Lasthandhabungsmanipulators vorgesehen ist.

Autonome Flurförderzeuge zur automatisierten Kommissionierung sind bekannt, die einzelne Packstücke, sogenannte Kolli, aus Regalen eines Regallagers greifen und auf das Flurförderzeug oder auf ein Begleitfahrzeug ablegen.

Es gibt mittels Computer unterstützte Verfahren, die ein optimiertes Packmuster für eine mit Packstücken zu kommissionierende Lasttragvorrichtung errechnen, sogenannte Packmustergeneratoren. Dadurch können die Packstücke möglichst kompakt und stabil auf eine Lasttragvorrichtung gepackt werden.

Es sind stationäre Kommissionierroboter mit nach oben und unten offenen Containern bekannt, bei denen eine Lasttragvorrichtung während des Kommissioniervorgangs von oben nach unten gesenkt wird, sobald eine Ebene mit Packstücken gepackt wurde. Eine mit Packstücken gepackte Ebene wird mit Schiebern an allen vier Seiten komprimiert und zusammengeschoben.

Es ist auch bekannt, während bzw. nach dem Kommissionieren einer mit Packstücken beladenen Lasttragvorrichtung die fertig gepackte Lasttragvorrichtungen zu stabilisieren. Hierfür wird eine Folie oder Bänder vor oder nach Abschluss des Kommissioniervorgangs um die Lasttragvorrichtung gespannt.

Aus der WO 2016/118955 A1 ist ein mobiler Kommissionierroboter mit einem Hubmast und daran anhebbare und absenkbare Gabelzinken bekannt, mit denen Packstücke aus einem Lager entnommen und diese Packstücke direkt auf eine fahrzeugseitigen Rollenbahn abgelegt werden. Um die auf der Rollenbahn abgelegten Packstücke für den Transport mit dem Kommissionierroboter zu sichern, ist eine in Fahrzeugquerrichtung verschiebbare Platte vorgesehen, die die auf der Rollenbahn abgelegten Packstücke an eine Anschlagplatte oder an den Gabelrücken der abgesenkten Gabelzinken drücken kann.

Die US 9 592 759 B1 offenbart einen gattungsgemäßen mobilen und autonomen Kommissionierroboter, der Packstücke aus einem Lager entnehmen und auf eine mitgeführte Palette kommissionieren kann und hierzu mit Roboterarmen versehen ist, die einen Greifer und/oder einen Sauger für Packstück umfassen. Von den Roboterarmen werden mit dem Greifer bzw. dem Sauger die Packstück gemäß einem gewünschten Packmuster auf der Palette abgelegt. Die US 9 592 759 B1 offenbart einen autonomen Kommissionierroboter gemäß dem Oberbegriff des Anspruchs 1.

Der vorliegenden Erfindung liegt die Aufgabe zugrunde, Lasttragvorrichtungen automatisiert mit Hilfe von einem autonomen Kommissionierflurförderzeug stabiler zu packen. Diese Aufgabe wird erfindungsgemäß dadurch gelöst, dass die Feinmanipulatorvorrichtung eine als Schiebevorrichtung ausgebildete Feinpositionierungsvorrichtung auf mindestens einer Seite der Lasttragvorrichtung umfasst und die Feinmanipulatorvorrichtung ausgebildet ist, Spalte, die durch das Ablageverfahren oder durch die Konstruktion des Lasttragmittels bedingt sind und zwischen einzelnen Packstücken entstehen, zu eliminieren.

Ein Gedanke der Erfindung ist also, das Packmuster auf einer Lasttragvorrichtung zu verbessern, indem die Lage von Packstücken, sogenannten Kolli, beim Packen auf der Lasttragvorrichtung korrigiert wird. Dadurch kann die Stabilität der mit Packstücken bepackten Lasttragvorrichtung erhöht werden und/oder die Stapelhöhe erhöht werden.

Dadurch werden Vorteile während des Kommissioniervorgangs erzielt, da der mobile Kommissionierroboter schneller fahren kann. Zudem können Lasttragvorrichtungen mit mehr Packstücken bepackt werden, so dass weniger Lasttragvorrichtungen benötigt werden, um die gleichen und die gleiche Anzahl von Packstücken zu transportieren. LKWs werden somit besser befüllt. Weiterhin werden Wechsel von Lasttragvorrichtungen und Rüstzeiten reduziert. Ferner können auch die mobilen Kommissionierroboter eine höhere Fahrgeschwindigkeit durch die Regalgänge eines Lagers sowie höhere Kurvengeschwindigkeiten erzielen. Mit dem mobilen Kommissionierroboter ist somit eine Vorrichtung zum Verdichten und Zurechtrücken von Packstücken auf dem autonomen Kommissionierfahrzeug geschaffen. Im Folgenden wird weiterhin ein Verfahren zur Korrektur der Lage von den einzelnen Packstücken auf der Lasttragvorrichtung beschrieben.

Gemäß der Erfindung umfasst die Feinmanipulatorvorrichtung des mobilen Kommissionierroboters eine als Schiebevorrichtung ausgebildete Feinpositionierungsvorrichtung auf mindestens einer Seite der Lasttragvorrichtung. Die Schiebevorrichtung umfasst einen Aktor, der hydraulisch, pneumatisch, mechanisch oder gemäß einer aus dem Stand der Technik bekannten Technologie realisiert ist. Durch die Verschiebevorrichtung lassen sich Packstücke auf ein Gegenlager, das beispielsweise als gegenüberliegende fest angeordnete Wand des Kommissionierroboters ausgebildet ist, schieben.

Um die Packstücke auf die Lasttragvorrichtung sowohl nach innen als auch nach au-ßen zu korrigieren, ist bevorzugt der mobile Kommissionierroboter mit einer translatorisch, bidirektional wirkenden Feinpositionierungsvorrichtung mit einer Saugvorrichtung zum translatorischen Richtungswechsel der Packstücke ausgebildet. Somit lässt sich nicht nur eine Schiebewirkung, sondern auch eine ziehende Wirkung auf die Packstücke erzielen.

Um Packstücke relativ zueinander bezüglich ihrer horizontalen Lagen zu verschieben und zu korrigieren, umfasst die Feinmanipulatorvorrichtung gemäß einer vorteilhaften Weiterbildung der Erfindung zwei übereinander angeordnete Feinpositionierungsvorrichtungen.

Hierbei ist die obere Feinpositionierungsvorrichtung mit einer Schiebevorrichtung und/oder einer Saugvorrichtung und die darunter angeordnete Feinpositionierungsvorrichtung mit einer Saugvorrichtung und/oder einer Schiebevorrichtung ausgebildet ist. Mittels der Saugvorrichtung wird eine Haltevorrichtung erzielt und es lässt sich beispielsweise die darunter liegende Ebene der Packstücke in Position halten und ein Verrutschen der Packstücke wird verhindert, während darüber angeordnete Packstücke mit der Schiebevorrichtung in die entgegengesetzte Richtung geschoben werden. Mittels der Saugvorrichtung können auch Packstücke nach Außen gezogen werden. Hierbei kann die obere Feinpositionierungsvorrichtung mit einer Schiebevorrichtung und die darunter angeordnete Feinpositionierungsvorrichtung mit einer Saugvorrichtung ausgebildet sein. Alternativ kann die obere Feinpositionierungsvorrichtung mit einer Saugvorrichtung und die darunter angeordnete Feinpositionierungsvorrichtung mit einer Schiebevorrichtung ausgebildet sein. Alternativ kann an der oberen Feinpositionierungsvorrichtung und an der unteren Feinpositionierungsvorrichtung jeweils eine Kombination aus Schiebevorrichtung und Saugvorrichtung ausgebildet sein. Es versteht sich somit, dass an den Feinpositioniervorrichtungen sowohl nur ein Schiebevorrichtung oder nur eine Saugvorrichtung als auch eine Kombination aus Schieber und Saugvorrichtung realisiert sein kann.

Die Feinmanipulatorvorrichtung kann auf einer Höhe fest angeordnet sein. Die Feinmanipulatorvorrichtung erstreckt sich hierbei vorteilhafterweise über die gesamte Höhe einer mit Packstücken zu beladenden Lasttragvorrichtung.

Gemäß einer vorteilhaften Ausführungsform der Erfindung ist die Feinmanipulatorvorrichtung höhenverstellbar ausgebildet. Es kann auch die Feinmanipulatorvorrichtung derart ausgebildet sein, dass die tiefer gelegene Ebene die Position durch einen festen definierten Rahmen hält und in der darüber liegenden Ebene die Packstücke auf den definierten kleineren Rahmen zusammenschiebt. Somit kann die Feinmanipulatorvorrichtung klein gebaut werden und für verschiedene Ebenen einer Lasttragvorrichtung wirken.

Bevorzugt ist die Feinmanipulatorvorrichtung an mehreren Seiten, insbesondere an zwei rechtwinklig zueinander angeordneten Seiten, mit jeweils mindestens einer Feinpositionierungsvorrichtung bezüglich der Lasttragvorrichtung ausgebildet. Zu diesen mindestens zwei Seiten sind bevorzugt gegenüberliegende feste Wände als Gegenlager ausgebildet, gegen die die Packstücke schiebbar sind. Es versteht sich, dass Feinpositionierungsvorrichtungen an jeder Seite und somit an allen vier Seiten einer rechteckig ausgebildeten Lasttragvorrichtung angeordnet sein können.

Die Feinmanipulatorvorrichtung erstreckt sich vorteilhafterweise über die gesamte Länge der entsprechenden Seite der Lasttragvorrichtung.

Gemäß einer vorteilhaften Ausführungsform der Erfindung ist die Feinmanipulatorvorrichtung mehrteilig mit mehreren Feinpositionierungsvorrichtungen für mindestens eine Seite der Lasttragvorrichtung ausgebildet. Die einzelnen Feinpositionierungsvorrichtungen an einer Seite der Lasttragvorrichtung sind bevorzugt unabhängig voneinander betätigbar. Dadurch können einzelne Packstücke auf die Lasttragvorrichtung zusammengeschoben werden. Beispielsweise sind vier verschiedene Feinpositionierungsvorrichtungen in einer Linie von einer Längsseite der Lasttragvorrichtung ausgebildet. Entsprechend des Packmusters wird die richtige Feinpositionierungsvorrichtung angesteuert, um die Lasttragvorrichtung komprimierter zusammenzupacken. Somit wird Energie eingespart und gegebenenfalls kann der Kommissioniervorgang bei verschiedenen Faktoren optimiert werden.

Die Aufgabe wird auch durch ein Verfahren zum Betreiben eines oben beschriebenen mobilen Kommissionierroboters dadurch gelöst, dass mit der zusätzlichen Feinmanipulatorvorrichtung am Kommissionierroboter einzelne Packstücke auf der als Palette ausgebildeten Lasttragvorrichtung feinjustiert werden, indem mit der Feinmanipulatorvorrichtung Spalte, die durch das Ablageverfahren oder durch die Konstruktion des Lasttragmittels bedingt sind und zwischen einzelnen Packstücken entstehen, eliminiert werden. Somit lässt sich eine verdichtete Lasttragvorrichtung während des Kommissionierens erstellen. Der mobile Kommissionierroboter, auch Robotik-Picker genannt, kann somit schneller fahren, da auch bei einer Bremsung oder Kurvenfahrt die Lasttragvorrichtung stabiler gepackt ist. Für einen Kommissionierauftrag wird somit weniger Zeit benötigt. Zusätzliche Sicherungsmaßnahmen zur Stabilisierung der Packstücke auf der Lasttragvorrichtung im laufenden Kommissioniervorgang, wie zum Beispiel eine Teilfolierung, das heißt eine selbsthaftende Klarsichtdehnfolie ist um die unteren gepackten Kolli-Ebenen gespannt, können somit zumindest zum Teil entfallen.

Zudem können mit der Feinmanipulatorvorrichtung Fehler, die bei der Positionierung des Packstücks beim Auflegen auf die Lasttragvorrichtung mittels des Lasthandhabungsmanipulators, auftreten, mittels der Feinpositionierungsvorrichtung ausgeglichen werden. Solche Fehler treten beispielsweise auf, weil Spalte aufgrund der Funktion des Lasttragmittels oder aufgrund der Mechanik des Lasttragmittels zwangsweise beim Absetzen oder Aufsetzen eines Packstückes auf der Lasttragvorrichtung entstehen. Bei dem erfindungsgemäßen Kommissionierroboter können daher Lasttragmittel verwendet werden, bei denen Spalte zwischen abgelegten Packstücken entstehen, wobei mit der Feinmanipulatorvorrichtung die bestehenden Spalte zwischen den Packstücken eliminiert werden und eine hohe Stabilität der mit Packstücken bepackten Lasttragvorrichtung erzielt wird.

Gemäß eines bevorzugten Verfahrens wird jedes einzelne Packstück auf die Lasttragvorrichtung mit einem Lasthandhabungsmanipulator und dessen Lasttragmittel gesetzt und danach das Packstück mit der Feinmanipulatorvorrichtung feinjustiert. Dies hat den Vorteil, dass mit einer überschaubaren geringeren Energiemenge und entsprechend dafür ausgelegten Feinmanipulatorvorrichtung das Packstück korrigierbar ist.

Alternativ ist die Feinpositioniervorrichtung derart ausgebildet, dass eine ganze Ebene von Packstücken auf die Lasttragvorrichtung zusammen mit der Feinmanipulatorvorrichtung feinjustiert wird. Dies hat den Vorteil, dass gegebenenfalls schneller die Korrektur erfolgt. Es können Positionsfehler zwischen mehreren einzelnen Packstücken ausgeglichen werden. Die Feinmanipulatorvorrichtung ist somit größer ausgelegt, da höhere Kräfte aufgewendet werden müssen als gegenüber der Bewegung von nur einem einzigen Packstück gemäß vorgenannter obiger Ausführungsform.

Um zu verhindern, dass die Packstücke aufeinander gestapelt werden und eine sich nach oben verjüngende Pyramidenform bilden, werden die Packstücke gemäß einer vorteilhaften Weiterbildung der Erfindung auf die Lasttragvorrichtung auf Sollpositionen, insbesondere nach einem individuell definierten Packmuster, nach außen oder innen in der Ebene mit der Feinmanipulatorvorrichtung feinjustiert. Somit kann erreicht werden, dass beispielsweise durch Ziehen der Packstücke nach außen diese mit ihrer Außenkante gleichzeitig mit der Außenkante der Lasttragvorrichtung fluchten. Somit wird eine dichtere Lasttragvorrichtung gebaut bzw. gepackt.

Gemäß einer vorteilhaften Weiterbildung der Erfindung wird mit der Feinmanipulatorvorrichtung während der Fahrt des Kommissionierroboters eine temporäre Ladungssicherung der auf die Lasttragvorrichtung abgelegten Packstücke durchgeführt. Die Feinmanipulatorvorrichtung kann beispielsweise während der Fahrt des mobilen Kommissionierroboters als temporäre Ladungssicherung zum Beispiel der obersten oder der oberen vollständigen Lage und Ebene von Packstücken verwendet werden. Somit wird auch ein Herabfallen von Packstücken von der fertig kommissionierten Lasttragvorrichtung verhindert. Die Fahr- und Kurvengeschwindigkeit des mobilen Kommissionierroboters kann somit erhöht werden und es kann eine höhere Umschlagleistung erzielt werden.

Weitere Vorteile ergeben sich, wenn gemäß einer vorteilhaften Ausgestaltungsform der Erfindung die Feinmanipulatorvorrichtung gleichzeitig mit dem Fahrantrieb und/oder gleichzeitig mit dem Lasthandhabungsmanipulator betrieben wird. Hierdurch kann beispielswiese der Lasthandhabungsmanipulator mit größeren Positionierungstoleranzen der Packstücke und somit schneller und ungenauer betrieben werden, wodurch sich eine Zeitersparnis beim Kommissionieren der Packstücke ergibt und eine höhere Umschlagsleistung des mobilen Kommissionierroboters erzielt wird.

Weitere Vorteile und Einzelheiten der Erfindung werden anhand der in den schematischen Figuren dargestellten Ausführungsbeispiele näher erläutert. Hierbei zeigen
- Fig. 1 eine: schematische Seitenansicht eines erfindungsgemäßen mobilen Kommissionierroboters in einem Lager,
- Fig. 2 bis 7: schematische Seitenansichten beim Ablegen eines Packstücks mittels des Lasttragmittels auf eine Lasttragvorrichtung,
- Fig. 8 und 9: eine Draufsicht auf eine Lasttragvorrichtung beim Auflegen von einem Packstück mit einem Lasttragmittel,
- Fig. 10 und 11: eine Draufsicht auf eine Lasttragvorrichtung eines erfindungsgemäßen mobilen Kommissionierroboters mit einer Feinmanipulatorvorrichtung auf einer Seite und
- Fig. 12 und 13: eine Draufsicht auf eine Lasttragvorrichtung eines erfindungsgemäßen mobilen Kommissionierroboters mit einer Feinmanipulatorvorrichtung bezüglich zwei Seiten.

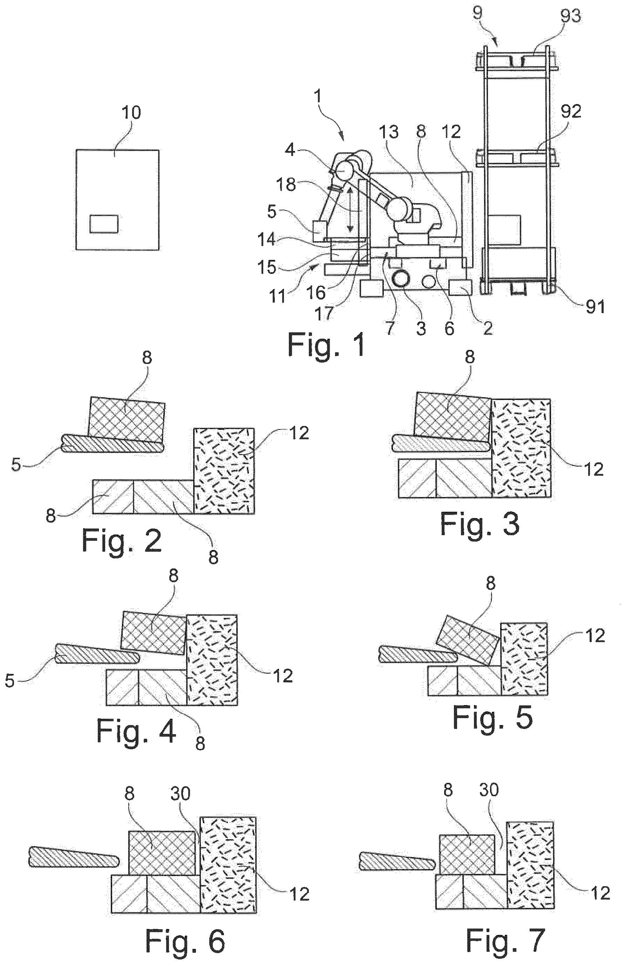

Die Fig. 1 zeigt einen mobilen Kommissionierroboter 1 mit einem autonomen Fahrantrieb 2, einer Steuerung 3 und einem Lasthandhabungsmanipulator 4. Ein Lasttragmittel 5, mit dem Packstücke 8 gehandhabt werden können, ist an dem Lasthandhabungsmanipulator 4 angeordnet. Der mobile Kommissionierroboter 1 ist mit einer Feinmanipulatorvorrichtung 11 ausgebildet.

Als transparente Darstellung ist eine Aufnahmeeinrichtung 6 für eine Lasttragvorrichtung 7 und diese sowie die Feinmanipulatorvorrichtung 11 in der Fig. 1 an dem Kommissionierroboter 1 dargestellt.

Der mobile Kommissionierroboter 1 weist die Aufnahmeeinrichtung 6 entweder vor oder hinter dem Lasthandhabungsmanipulator 4 auf, so dass dieser entweder im Vordergrund oder hinter der Aufnahmeeinrichtung 6 und der Feinmanipulatorvorrichtung 11 zu sehen ist. Auf die Lasttragvorrichtung 7 werden einzelne Packstücke 8 während eines Kommissioniervorgangs mit dem Lasthandhabungsmanipulator 4 gestapelt. Die Packstücke 8 werden von dem mobilen Kommissionierroboter 1 mit dem Lasthandhabungsmanipulator 4 von einer Quellpalette 91, 92, 93 aus einem Lager 9 entnommen. Der Kommissionierroboter 1 hat von einem beispielsweise zentralen Lagerrechner 10 den gesamten Kommissioniervorgang und Kommissionierauftrag zu seiner Steuerung 3 per Funk oder per Kabel übermittelt bekommen und fährt im Lager 9 danach einen bestimmten Kommissionierweg ab. Dabei stapelt der Kommissionierroboter 1 die Packstücke 8 auf der Lasttragvorrichtung 7 entsprechend einem vorbestimmten Packmuster. Das Packmuster ist von dem Lagerrechner 10 oder der Steuerung 3 abhängig von dem spezifischen Kundenauftrag optimiert und generiert worden.

Die Feinmanipulatorvorrichtung 11 dient dazu, bereits abgelegte einzelne Packstücke 8, sogenannte Kolli, auf der Lasttragvorrichtung 7 feinzupositionieren, so dass die Lasttragvorrichtung 7 stabiler und mit einer optimierten Anzahl von Packstücken 8 gepackt werden kann.

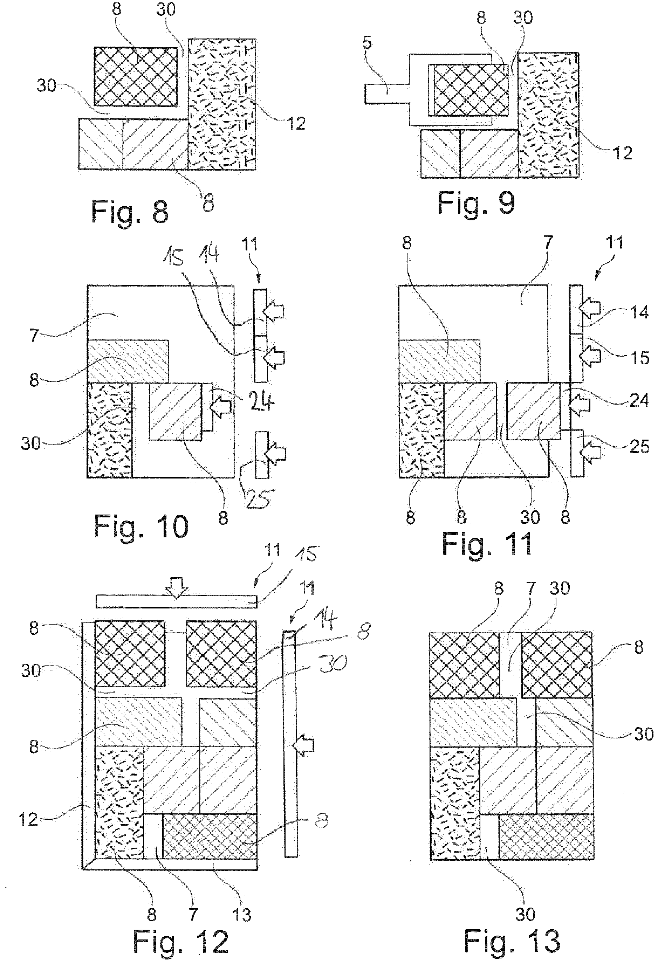

Die Feinmanipulatorvorrichtung 11 umfasst feste Seitenwände 12 und 13, die Gegenwände als Gegenlager jeweils zu einer als Feinpositionierungsvorrichtung 14, 15 ausgebildeten Schiebevorrichtung bilden. Die Schiebevorrichtungen sind jeweils als Feinpositionierungsvorrichtungen 14, 15 in der Fig. 1 auf der linken Seite am mobilen Kommissionierroboter 1 ausgebildet. Die Feinpositionierungsvorrichtungen 14, 15 sind gegenüberliegend zur Wand 12 an den Seiten der Aufnahmeeinrichtung 6 angeordnet und die Wand 13 ist senkrecht zur Wand 12 ausgebildet. Die Wände 12 und 13 bilden eine zusätzliche Stabilität beim Packen der Lasttragvorrichtung 7. Die Feinpositionierungsvorrichtungen 14 und 15 sind in vertikaler Richtung übereinander angeordnet und bilden nicht nur eine Schiebevorrichtung aus, sondern auch eine Saugvorrichtung 16, 17 mit einer steuerbar anhaftenden Funktion auf der Seite der zu packenden Packstücke 8. Mit den Saugvorrichtungen 16, 17 lassen sich die Packstücke 8 gegebenenfalls jeweils nach außen weg von der Wand 12 ziehen, um beispielsweise die Außenkante der Packstücke 8 mit der Außenkante der Lasttragvorrichtung 7 fluchten zu lassen. Ferner besteht die Möglichkeit, die Packstücke 8 auf verschiedenen Ebenen relativ zueinander zu verschieben und zu versetzen, wenn die Feinpositionierungsvorrichtung 14 nicht nur als Schiebevorrichtung, sondern auch als Zugvorrichtung dient. Die Saugvorrichtung 16 ist der Feinpositionierungsvorrichtung 14 zugeordnet und die Saugvorrichtung 17 ist der Feinpositionierungsvorrichtung 15 zugeordnet. Die Feinpositionierungsvorrichtungen 14 und 15 sind in der Höhe mittels eines Portals 18 mit einem entsprechenden Linearantrieb verschiebbar. Die Feinpositionierungsvorrichtungen 14 und 15 können entweder ein einzelnes Packstück 8 feinpositionieren oder gemeinsam eine gesamte Ebene mit mehreren Packstücken verschieben, wie dies in den Figuren 12 gezeigt ist.

Die Figuren 2 bis 7 zeigen in der Seitenansicht, wie beispielsweise mit einem Lasttragmittel 5 ein Packstück 8 auf bereits gestapelte Packstücke 8 gelegt wird. Dabei wird vom Lasttragmittel 5 mit dem Lasthandhabungsmanipulator 4 das abzulegende Packstück 8 bis zur Wand 12 positioniert.

Aufgrund der Geometrie in Form eines Keiles des Lasttragmittels 5 ist das Packstück 8 leicht gegen die Wand 12 geneigt. Dies ist in der Fig. 3 deutlich dargestellt.

In der Fig. 4 fährt das Lasttragmittel 5 zurück, so dass das Packstück 8 auf die darunter liegenden Packstücke 8 gelegt wird.

Die Fig. 6 zeigt, dass das Packstück 8 an der Wand 12 mit einem gewissen Spalt 30 abgelegt ist.

Die Fig. 5 und 7 zeigen, dass bei einer möglicherweise anderen Ablage zufällig ein grö-ßerer Spalt 30 zwischen Packstück 8 und Wand 12 entsteht. Alle diese Fehlpositionierungen in Form der Spalte 30 können mit der Feinmanipulatorvorrichtung 11 ausgeglichen werden.

Die Fig. 8 und 9 zeigen jeweils in einer Draufsicht mit einem anderen Lasttragmittel 5, das als Greifer ausgebildet ist, der ein Packstück 8 seitlich zwischen zwei Armen greift. Der Spalt 30 ist bei einem derartigen, als Greifer ausgebildeten Lasttragmittel 5 deutlich größer. Zudem können Spalte 30 vor und seitlich des Packstückes 8 entstehen. Alle diese Spalte 30 werden mit der Feinmanipulatorvorrichtung 11 ausgeglichen.

Die Fig. 10 und 11 zeigen jeweils die Feinmanipulatorvorrichtung 11 im abstrahierten Ausschnitt und in der Draufsicht auf einer Längsseite der Lasttragvorrichtung 7 des erfindungsgemäßen mobilen Kommissionierroboters 1. Die Feinmanipulatorvorrichtung 11 umfasst mehrere Feinpositionierungsvorrichtungen 14, 15, 24, 25, die sich bevorzugt über die gesamte Länge der Seite der Lasttragvorrichtung 7 erstrecken, an der die Feinmanipulatorvorrichtung 11 angeordnet ist. Die Feinpositionierungsvorrichtungen 14, 15, 24, 25 sind bevorzugt unabhängig voneinander betätigbar.

Die Fig. 10 zeigt, mittels eines symbolisch dargestellten Pfeils, in die in der Fig. 10 dargestellte Linksrichtung, wie die Feinpositionierungsvorrichtung 24 ein Packstück 8 auf der Lasttragvorrichtung 7 bis zum Anschlag von einem bereits genau positionierten Packstück 8 schiebt, so dass der Spalt 30, der beim Ablegen des Packstückes 8 mittels des Lasttragmittels 5 auf der Lasttragvorrichtung 7 entsteht, eliminiert wird. Rechtwinklig dazu ist bereits ein weiteres Packstück 8 entsprechend einem vorher bestimmten Packmuster feinpositioniert. Die Feinmanipulatorvorrichtung 11 ist in diesem Ausführungsbeispiel vierteilig auf der Längsseite der Aufnahmeeinrichtung 6 ausgebildet.

Die Fig. 11 zeigt in Fortführung zur Fig. 10, wie wiederum die Feinpositionierungsvorrichtung 24 alleine ein weiteres Packstück 8 in Höhe des zur Fig. 10 dargestellten verschiebbaren Packstücks 8 bis zu einem Anschlag geschoben wird.

Somit wird das Ziel, eine größere Packdichte und eine größere Stabilität auf der Lasttragvorrichtung 7 zu erreichen, durch Verschieben der Packstücke 8 erreicht. Die Spalte 30, die durch das Ablageverfahren oder durch die Konstruktion des Lasttragmittels 5 bedingt sind und zwischen einzelnen Packstücken 8 entstehen und sich somit negativ auf die Stabilität der Lasttragvorrichtung 7 auswirken, werden durch den Einsatz und das Verfahren der Feinmanipulatorvorrichtung 11 eliminiert. Die Spalte 30 können entstehen, wenn das Packstück 8 seitlich gegriffen wird und dadurch zwischen dem aktuell abzulegenden Packstück 8 und dem Nachbarpackstück 8 ein Spalt 30 in der Dicke des Lasttragmittels 5 entsteht (Fig. 8 und 9). Ferner entstehen Spalte 30 durch das Anfahrverfahren des Lasttragmittels 5 an die freie Position auf der Lasttragvorrichtung 7 und wenn zum Zweck der Prozesssicherheit ein Sicherheitsabstand verbleiben muss. Wie in den Fig. 2 bis 7 gezeigt ist, entstehen Spalte, wenn das Lasttragmittel 5 das Packstück 8 nach vorn ablegt, das Lasttragmittel 5 dabei aber schräg angestellt ist, also im Querschnitt gesehen keilförmig ausgebildet ist, und das Packstück 8 im letzten Ablegemoment nach vorne kippt.

Die Fig. 12 und 13 zeigen in der Draufsicht ein Packmuster, wie auf die Lasttragvorrichtung 7 verschiedene Packstücke 8 gepackt sind und gepackt werden, wobei die Feinmanipulatorvorrichtung 11 an zwei Seiten jeweils eine einteilige Feinpositionierungsvorrichtung 14 und 15 aufweisen. Die Feinpositionierungsvorrichtung 14 ist zur Feinpositionierungsvorrichtung 15 rechtwinklig angeordnet. Die Seite der Feinpositionierungsvorrichtung 14 ist länger als die Seite der Feinpositionierungsvorrichtung 15. Jeweils gegenüberliegend sind feste Wände 12 und 13 ausgebildet. Die Fig. 12 zeigt, dass bereits drei Seiten der Lasttragvorrichtung 7 mit den Seiten der Packstücke 8 fluchten. Eine vierte Seite, die oben in der Fig. 12 dargestellt ist, fluchtet dagegen noch nicht mit die Lasttragvorrichtung 7, so dass die Feinpositionierungsvorrichtung 15 die beiden Packstücke 8 feinpositioniert und die Spalte 30 eliminiert.

Die Fig. 13 zeigt die Packstücke 8 fluchtend zu den Seiten der Lasttragvorrichtung 7, von der Feinmanipulatorvorrichtung 11 feinjustiert. Somit ist zum einen eine Feinmanipulatorvorrichtung 11 zum Verschieben der als Pakete ausgebildeten Packstücke 8 auf eine Palette als Lasttragvorrichtung 7 mit einem entsprechenden Verfahren geschaffen worden.

Wie zur Fig. 10 und 11 dargestellt, kann nach jedem abgelegten Packstück, also einem Packstück 8, der Verschiebemechanismus in Form der Feinpositionierungsvorrichtung 14, 15, 24 und 25 eingesetzt werden, oder, wie in der Fig. 12 gezeigt, nach Abschluss einer Lage von Packstücken 8 ein Verschieben von mehreren Packstücken 8 gemeinschaftlich erfolgen. Damit wird durch dieses Verschiebeverfahren das Ziel erreicht, eine stabile Lasttragvorrichtung 7 zu erhalten, die die Spalte 30 zwischen den einzelnen Packstücken 8 eliminiert. Die Packstücke 8 werden als Pakete nach innen oder nach außen auf Sollposition geschoben, die vorher von einem Packmustergenerator im Lagerrechner 10 bzw. der Steuerung 3 erzeugt wurden. Durch das Ziehen der Packstücke 8 eventuell nach außen wird erreicht, dass pyramidenförmige Packmuster vermieden werden.

Die Feinmanipulatorvorrichtung 11 kann lageweise die Packstücke 8 auf der Lasttragvorrichtung 7 und somit die einzelnen Lagen der Packstücke 8 nacheinander verdichten oder mehrere Lagen der Packstücke 8 gemeinsam verdichten.

Mit der Feinmanipulatorvorrichtung 11 an dem mobilen Kommissionierroboter 1 wird ermöglicht, dass eine größere Packdichte und/oder eine höhere Stabilität der mit Packstücken bepackten Lasttragvorrichtung 7 erzielt werden.

Vorteile von solchen stabil bepackten Lasttragvorrichtungen 7 und somit stabileren Packmustern sind, dass der mobile Kommissionierroboter 1 schneller fahren kann und weniger externe Sicherungsmaßnahmen zur Stabilisierung auch bereits im laufenden Kommissioniervorgang, zum Beispiel durch Teilfolierung, durchgeführt werden müssen. Es können verschiedene Lasttragmittel 5 mit verschiedene Greiferprinzipien und - technologien eingesetzt werden, ohne die Stabilität des Packmusters zu verschlechtern, da entstehende Spalte 30 eliminiert werden.

Ferner kann die Feinmanipulatorvorrichtung 11 mit den Feinpositionierungsvorrichtungen 14, 15, 24, 25 auch während der Fahrt des mobilen Kommissionierroboters 1 als temporäre Ladungssicherung zum Beispiel der obersten oder der oberen vollständigen Lage und Ebene von Packstücken 8 verwendet werden, wenn über das Portal 18 die Feinpositionierungsvorrichtungen 14, 15 nach oben gefahren sind. Somit wird auch ein Herabfallen von Packstücken 8 von der fertig kommissionierten Lasttragvorrichtung 7 verhindert. Die Fahr- und Kurvengeschwindigkeit kann somit erhöht werden und es kann eine höhere Umschlagleistung erzielt werden.

Die Erfindung ist nicht auf das dargestellte Ausführungsbeispiel beschränkt, bei dem der mobile Kommissionierroboter 1 aus einem einzigen Fahrzeug besteht, das mit dem Lasthandhabungsmanipulator 4 und dem Lasttragmittel 5 sowie mit der Aufnahmeeinrichtung 6 für die Lasttragvorrichtung 7 und der Feinmanipulatorvorrichtung 11 versehen ist.

Es versteht sich, dass alternativ, der mobile Kommissionierroboter 1 auch aus zwei miteinander gekoppelten Fahrzeugen bestehen kann, wobei das erste Fahrzeug mit dem Lasthandhabungsmanipulator 4 und dem Lasttragmittel 5 versehen ist und das zweite Fahrzeug, beispielsweise ein Begleitfahrzeug, mit der Aufnahmeeinrichtung 6 für die Lasttragvorrichtung 7 und der Feinmanipulatorvorrichtung 11 versehen ist.

## Patentansprüche

1. Mobiler Kommissionierroboter (1) mit einem autonomen Fahrantrieb (2), einer Steuerung (3), einem Lasthandhabungsmanipulator (4), einem Lasttragmittel (5) zur Handhabung eines Packstückes (8), wobei das Lasttragmittel (5) am Lasthandhabungsmanipulator (4) angeordnet ist, und einer Aufnahmeeinrichtung (6) für eine als Palette ausgebildete Lasttragvorrichtung (7) zum Stapeln von einzelnen Packstücken (8), die aus einem Lager (9) von verschiedenen Quellpaletten entnehmbar sind, wobei eine zusätzliche Feinmanipulatorvorrichtung (11) am Kommissionierroboter (1) zur Feinjustierung einzelner Packstücke (8) auf der als Palette ausgebildeten Lasttragvorrichtung (7) nach einer Ablage mittels des Lasthandhabungsmanipulators (4) vorgesehen ist, **dadurch gekennzeichnet, dass** die Feinmanipulatorvorrichtung (11) eine als Schiebevorrichtung ausgebildete Feinpositionierungsvorrichtung (14, 15, 24, 25, 26) auf mindestens einer Seite der Lasttragvorrichtung (7) umfasst und die Feinmanipulatorvorrichtung (11) ausgebildet ist, Spalte (30), die durch das Ablageverfahren oder durch die Konstruktion des Lasttragmittels (5) bedingt sind und zwischen einzelnen Packstücken (8) entstehen, zu eliminieren.

2. Kommissionierroboter (1) nach Anspruch 1, **dadurch gekennzeichnet, dass** die Feinpositionierungsvorrichtung (14, 15, 24, 25) mit einer Saugvorrichtung (16, 17) versehen ist.

3. Kommissionierroboter (1) nach Anspruch 1 oder 2, **dadurch gekennzeichnet, dass** die Feinmanipulatorvorrichtung (11) mindestens zwei übereinander angeordnete Feinpositionierungsvorrichtungen (14, 15, 24, 25) umfasst.

4. Kommissionierroboter (1) nach Anspruch 3, **dadurch gekennzeichnet, dass** die obere Feinpositionierungsvorrichtung (14) mit einer Schiebevorrichtung und/oder einer Saugvorrichtung (17) und die darunter angeordnete Feinpositionierungsvorrichtung (15) mit einer Saugvorrichtung (17) und/oder einer Schiebevorrichtung ausgebildet ist.

5. Kommissionierroboter (1) nach einem der Ansprüche 1 bis 4, **dadurch gekennzeichnet, dass** die Feinmanipulatorvorrichtung (11) höhenverstellbar ausgebildet ist.

6. Kommissionierroboter (1) nach einem der Ansprüche 1 bis 5, **dadurch gekennzeichnet, dass** die Feinmanipulatorvorrichtung (11) an mehreren Seiten, insbesondere an zwei rechtwinklig zueinander angeordneten Seiten, mit jeweils mindestens einer Feinpositionierungsvorrichtung (14, 15, 24, 25) bezüglich der Lasttragvorrichtung (7) ausgebildet ist.

7. Kommissionierroboter (1) nach einem der Ansprüche 1 bis 6, **dadurch gekennzeichnet, dass** die Feinmanipulatorvorrichtung (11) mehrteilig mit mehreren Feinpositionierungsvorrichtungen (14, 15, 24, 25) für mindestens eine Seite der Lasttragvorrichtung (7) ausgebildet ist.

8. Verfahren zum Betreiben eines mobilen Kommissionierroboters (1) nach einem der Ansprüche 1 bis 7, wobei der mobile Kommissionierroboter (1) mit einem autonomen Fahrantrieb (2), einer Steuerung (3), mit einem Lasthandhabungsmanipulator (4), einem Lasttragmittel (5) zur Handhabung eines Packstückes (8) versehen ist, wobei das Lasttragmittel (5) am Lasthandhabungsmanipulators (4) angeordnet ist, und einer Aufnahmeeinrichtung (6) für eine als Palette ausgebildete Lasttragvorrichtung (7) zum Stapeln von einzelnen Packstücken (8) aus einer Quellpalette aus einem Lager (9) ausgebildet ist, **dadurch gekennzeichnet, dass** mit der zusätzlichen Feinmanipulatorvorrichtung (11) am Kommissionierroboter (1) einzelne Packstücke (8) auf der als Palette ausgebildeten Lasttragvorrichtung (7) feinjustiert werden, indem mit der Feinmanipulatorvorrichtung (11) Spalte (30), die durch das Ablageverfahren oder durch die Konstruktion des Lasttragmittels (5) bedingt sind und zwischen einzelnen Packstücken (8) entstehen, eliminiert werden.

9. Verfahren nach Anspruch 8, **dadurch gekennzeichnet, dass** jedes einzelne Packstück (8) auf die Lasttragvorrichtung (7) mit dem Lasthandhabungsmanipulator (4) gesetzt wird und danach das Packstück (8) mit der Feinmanipulatorvorrichtung (11) feinjustiert wird.

10. Verfahren nach Anspruch 8, **dadurch gekennzeichnet, dass** eine ganze Ebene von Packstücken (8) auf die Lasttragvorrichtung (7) zusammen mit der Feinmanipulatorvorrichtung (11) feinjustiert wird.

11. Verfahren nach einem der Ansprüche 8 bis 10, **dadurch gekennzeichnet, dass** die Packstücke (8) auf die Lasttragvorrichtung (7) auf Sollpositionen, insbesondere nach einem individuell definierten Packmuster, nach außen oder innen in der Ebene mit der Feinmanipulatorvorrichtung (11) feinjustiert werden.

12. Verfahren nach einem der Ansprüche 8 bis 11, **dadurch gekennzeichnet, dass** mit der Feinmanipulatorvorrichtung (11) während der Fahrt des Kommissionierroboters (1) eine temporäre Ladungssicherung der auf die Lasttragvorrichtung (7) abgelegten Packstücke (8) durchgeführt wird.

13. Verfahren nach einem der Ansprüche 8 bis 12, **dadurch gekennzeichnet, dass** die Feinmanipulatorvorrichtung (11) gleichzeitig mit dem Fahrantrieb (3) und/oder gleichzeitig mit dem Lasthandhabungsmanipulator (4) betrieben wird.

## Claims

1. Mobile order-picking robot (1) comprising an autonomous traction drive (2), a controller (3), a load-handling manipulator (4), a load-carrying means (5) for handling a package (8), wherein the load-carrying means (5) is arranged on the load-handling manipulator (4), and a receiving device (6) for a load-carrying apparatus (7), configured as a pallet, for stacking individual packages (8) which can be removed from a store (9) from various source pallets, wherein an additional fine manipulator apparatus (11) is provided on the order-picking robot (1) for fine adjustment of individual packages (8) on the load-carrying apparatus (7), configured as a pallet, after they have been deposited by means of the load-handling manipulator (4), **characterized in that** the fine manipulator apparatus (11) comprises a fine positioning apparatus (14, 15, 24, 25, 26), configured as a pushing apparatus, on at least one side of the load-carrying apparatus (7) and the fine manipulator apparatus (11) is configured to eliminate gaps (30) which are caused by the depositing process or by the construction of the load-carrying means (5) and occur between individual packages (8) .

2. Order-picking robot (1) according to Claim 1, **characterized in that** the fine positioning apparatus (14, 15, 24, 25) is provided with a suction apparatus (16, 17) .

3. Order-picking robot (1) according to Claim 1 or 2, **characterized in that** the fine manipulator apparatus (11) comprises at least two fine positioning apparatuses (14, 15, 24, 25) arranged one above the other.

4. Order-picking robot (1) according to Claim 3, **characterized in that** the upper fine positioning apparatus (14) is configured with a pushing apparatus and/or a suction apparatus (17) and the fine positioning apparatus (15) arranged beneath the upper fine positioning apparatus is configured with a suction apparatus (17) and/or a pushing apparatus.

5. Order-picking robot (1) according to any of Claims 1 to 4, **characterized in that** the fine manipulator apparatus (11) is configured so as to be vertically adjustable.

6. Order-picking robot (1) according to any of Claims 1 to 5, **characterized in that** the fine manipulator apparatus (11), on several sides, in particular on two sides arranged at a right angle in relation to each other, is configured with at least one fine positioning apparatus (14, 15, 24, 25) with respect to the load-carrying apparatus (7) in each case.

7. Order-picking robot (1) according to any of Claims 1 to 6, **characterized in that** the fine manipulator apparatus (11) is configured from several parts with a plurality of fine positioning apparatuses (14, 15, 24, 25) for at least one side of the load-carrying apparatus (7) .

8. Method for operating a mobile order-picking robot (1) according to any of Claims 1 to 7, wherein the mobile order-picking robot (1) is provided with an autonomous traction drive (2), a controller (3), with a load-handling manipulator (4), a load-carrying means (5) for handling a package (8), wherein the load-carrying means (5) is arranged on the load-handling manipulator (4), and a receiving device (6) for a load-carrying apparatus (7), configured as a pallet, for stacking individual packages (8) from a source pallet from a store (9), **characterized in that** individual packages (8) on the load-carrying apparatus (7), configured as a pallet, are finely adjusted by the additional fine manipulator apparatus (11) on the order-picking robot (1) by way of gaps (30), which are caused by the depositing process or by the construction of the load-carrying means (5) and occur between individual packages (8), being eliminated by the fine manipulator apparatus (11).

9. Method according to Claim 8, **characterized in that** each individual package (8) is placed onto the load-carrying apparatus (7) by the load-handling manipulator (4) and the package (8) is then finely adjusted by the fine manipulator apparatus (11).

10. Method according to Claim 8, **characterized in that** an plane layer of packages (8) on the load-carrying apparatus (7) are finely adjusted by the fine manipulator apparatus (11) together.

11. Method according to any of Claims 8 to 10, **characterized in that** the packages (8) on the load-carrying apparatus (7) are finely adjusted to desired positions, in particular in accordance with an individually defined packing pattern, towards the outside or inside in the plane by the fine manipulator apparatus (11) .

12. Method according to any of Claims 8 to 11, **characterized in that** temporary load securing of the packages (8) deposited onto the load-carrying apparatus (7) is carried out by the fine manipulator apparatus (11) during travel of the order-picking robot (1).

13. Method according to any of Claims 8 to 12, **characterized in that** the fine manipulator apparatus (11) is operated simultaneously with the traction drive (3) and/or simultaneously with the load-handling manipulator (4) .

## Revendications

1. Robot de préparation de commandes mobile (1), comprenant un système d'entraînement (2) autonome, un dispositif de commande (3), un manipulateur de manutention (4), un moyen porte-charge (5) pour manipuler un colis (8), le moyen porte-charge (5) étant disposé au niveau du manipulateur de manutention (4), et un équipement de réception (6) pour un dispositif porte-charge (7) réalisé sous forme de palette pour empiler des colis (8) individuels qui peuvent être prélevés dans un entrepôt (9) avec différentes palettes sources, dans lequel un dispositif manipulateur de précision supplémentaire (11) est prévu au niveau du robot de préparation de commandes (1) pour ajuster précisément des colis (8) individuels sur le dispositif porte-charge (7) réalisé sous forme de palette, après un dépôt au moyen du manipulateur de manutention (4),
**caractérisé en ce que** le dispositif manipulateur de précision (11) comprend un dispositif de positionnement précis (14, 15, 24, 25, 26) réalisé sous forme de dispositif poussoir sur au moins un côté du dispositif porte-charge (7), et le dispositif manipulateur de précision (11) est réalisé pour éliminer des interstices (30) qui sont dus au procédé de dépôt ou à la construction du moyen porte-charge (5) et apparaissent entre des colis (8) individuels.

2. Robot de préparation de commandes (1) selon la revendication 1, **caractérisé en ce que** le dispositif de positionnement précis (14, 15, 24, 25) est muni d'un dispositif d'aspiration (16, 17).

3. Robot de préparation de commandes (1) selon la revendication 1 ou 2, **caractérisé en ce que** le dispositif manipulateur de précision (11) comprend au moins deux dispositifs de positionnement précis (14, 15, 24, 25) disposés l'un au-dessus de l'autre.

4. Robot de préparation de commandes (1) selon la revendication 3, **caractérisé en ce que** le dispositif de positionnement précis (14) supérieur est réalisé avec un dispositif poussoir et/ou un dispositif d'aspiration (17), et le dispositif de positionnement précis (15) disposé au-dessous de celui-ci est réalisé avec un dispositif d'aspiration (17) et/ou un dispositif poussoir.

5. Robot de préparation de commandes (1) selon l'une quelconque des revendications 1 à 4, **caractérisé en ce que** le dispositif manipulateur de précision (11) est réalisé de manière réglable en hauteur.

6. Robot de préparation de commandes (1) selon l'une quelconque des revendications 1 à 5, **caractérisé en ce que** le dispositif manipulateur de précision (11) est réalisé sur plusieurs côtés, en particulier sur deux côtés disposés perpendiculairement l'un par rapport à l'autre, avec respectivement au moins un dispositif de positionnement précis (14, 15, 24, 25) par rapport au dispositif porte-charge (7).

7. Robot de préparation de commandes (1) selon l'une quelconque des revendications 1 à 6, **caractérisé en ce que** le dispositif manipulateur de précision (11) est réalisé en plusieurs parties avec plusieurs dispositifs de positionnement précis (14, 15, 24, 25) pour au moins un côté du dispositif porte-charge (7).

8. Procédé permettant de faire fonctionner un robot de préparation de commandes mobile (1) selon l'une quelconque des revendications 1 à 7, dans lequel le robot de préparation de commandes mobile (1) est pourvu d'un système d'entraînement autonome (2), d'un dispositif de commande (3), d'un manipulateur de manutention (4), d'un moyen porte-charge (5) pour manipuler un colis (8), le moyen porte-charge (5) étant disposé au niveau du manipulateur de manutention (4), et d'un équipement de réception (6) pour un dispositif porte-charge (7) réalisé sous forme de palette pour empiler des colis (8) individuels qui peuvent être prélevés dans un entrepôt (9) avec différentes palettes sources,
**caractérisé en ce que** le dispositif manipulateur de précision (11) supplémentaire au niveau du robot de préparation de commandes (1) ajuste précisément des colis (8) individuels sur le dispositif porte-charge (7) réalisé sous forme de palette **en ce que** le dispositif manipulateur de précision (11) élimine des interstices (30) qui sont dus au procédé de dépôt ou à la construction du moyen porte-charge (5) et apparaissent entre des colis (8) individuels.

9. Procédé selon la revendication 8, **caractérisé en ce que** chaque colis (8) individuel est posé sur le dispositif porte-charge (7) par le manipulateur de manutention (4), et ensuite le colis (8) est ajusté précisément par le dispositif manipulateur de précision (11) .

10. Procédé selon la revendication 8, **caractérisé en ce qu'**un niveau entier de colis (8) sur le dispositif porte-charge (7) est conjointement ajusté avec précision par le dispositif manipulateur de précision (11) .

11. Procédé selon l'une quelconque des revendications 8 à 10, **caractérisé en ce que** les colis (8) sont ajustés précisément sur le dispositif porte-charge (7) sur des positions de consigne, en particulier selon un schéma de mise en place défini individuellement, vers l'extérieur ou vers l'intérieur sur le niveau, par le dispositif manipulateur de précision (11).

12. Procédé selon l'une quelconque des revendications 8 à 11, **caractérisé en ce que** le dispositif manipulateur de précision (11) effectue pendant le déplacement du robot de préparation de commandes (1) une sécurisation de chargement temporaire des colis (8) déposés sur le dispositif porte-charge (7).

13. Procédé selon l'une quelconque des revendications 8 à 12, **caractérisé en ce que** le dispositif manipulateur de précision (11) fonctionne en même temps que le système d'entraînement (3) et/ou en même temps que le manipulateur de manutention (4).
